# EUROPÄISCHE PATENTSCHRIFT

(11) **EP 1 452 442 B1**
(45) Veröffentlichungstag und Bekanntmachung des Hinweises auf die Patenterteilung: **18.10.2006**
(21) Anmeldenummer: 04003823.4
(22) Anmeldetag: 19.02.2004
(51) Int. Cl.: B64C 13/24

(54) **Flugzeughochauftriebssystem mit Überlastsicherung**
Aircraft lift augmentation system with overload protection
Système hypersustentateur pour avion avec protection de surcharge

(30) Priorität: 26.02.2003 DE 10308301
(43) Veröffentlichungstag der Anmeldung: 01.09.2004
(73) Patentinhaber: Liebherr-Aerospace Lindenberg GmbH, 88161 Lindenberg/Allgäu (DE)
(72) Erfinder: Schievelbusch, Bernd, 88161 Lindenberg (DE)
(74) Vertreter: Laufhütte, Dieter

(56) Entgegenhaltungen:
- EP-A- 1 065 487
- DE-A- 3 800 647
- US-A- 4 575 027
- US-A- 4 786 013

## Beschreibung

Die Erfindung betrifft ein Flugzeughochauftriebssystem mit Überlastsicherung nach dem Oberbegriff des Anspruchs 1.

Es sind bereits Flugzeughochauftriebssysteme mit zentralen Antriebssystem für Flugzeuglandeklappen bekannt, bei denen die Antriebsenergie mittels Drehwellensystemen über die gesamte Spannweite an entsprechende Antriebsstationen der einzelnen Segmente der Landeklappensysteme bzw. der Vorflügelklappensysteme verteilt wird. Im Falle der Blockierung eines Einzelsegments müsste dieses Segment die gesamte Antriebsenergie des Zentralantriebs als Reaktionsenergie aufnehmen und dementsprechend massiv und schwer gebaut sein.

Als Schutzvorrichtungen sind deshalb mechanische Drehmomentbegrenzer an jeder Antriebsstation installiert, die bei Auftreten einer definierten Überlast die Antriebsenergie an die Flügelstruktur umleiten, so dass der blockierende Klappenkörper nicht beschädigt wird. In Folge des Nachlaufs der Antriebseinheit wird der Wellenstrang zwischen der Antriebseinheit und der Blockierstelle mit maximalem Antriebsmoment belastet. Die Lokalisierung des Fehlerortes erfolgt durch - falls vorhanden - eine mechanische Anzeige, die durch das Wartungspersonal visuell lokalisiert werden muss. Darüber hinaus ist die funktionelle Verfügbarkeit der mechanischen Drehmomentbegrenzer nur durch einen Test überprüfbar. Hierzu muss das Gerät aus dem Flugzeug ausgebaut werden. Derartige Anordnungen mit mechanischer Leistungsverteilung der Antriebsenergie über Drehwellen sind in allen Flugzeugtypen gängig

Flugzeughochauftriebssysteme sind beispielsweise bereits aus der US-A-4 786 013 und der US-A-4 575 027 bekannt.

Aufgabe der vorliegenden Erfindung ist es, einen verbesserten Schutz der Flugzeugstrukturelemente vor unzulässiger Belastung im Klemmfall zu erreichen, wobei die einzelnen Elemente des Antriebsstrangs im Klemmfall insgesamt geringer belastet werden sollen.

Erfindungsgemäß wird diese Aufgabe ausgehend von einem ein Flugzeughochauftriebssystem nach dem Oberbegriff des Anspruchs 1 durch die Kombination mit den Merkmalen des kennzeichnenden Teils des Anspruchs 1 gelöst.

Demnach werden die mechanischen Drehmomentbegrenzer am Eingang der Getriebe der Arbeitsstationen durch elektrische Lastsensoren am Übergabepunkt der Antriebsenergie vom Getriebe an den Klappenkörper ersetzt.

Hierdurch können die komplexen mechanischen Drehmomentbegrenzer entfallen, wodurch gegenüber den vorbekannten Systemen Gewicht und Kosten gespart werden können. Das elektrische Signal ermöglicht darüber hinaus eine sofortige Lokalisierung des Fehlerortes. Durch die Position des Sensors hinter dem jeweiligen Antriebsstationsgetriebes entfallen die Schwankungen des Getriebewirkungsgrades in der Messkette. Hierdurch wird die Messgenauigkeit erheblich verbessert. Durch eine elektronische Überwachung der Sensoren ist die Verfügbarkeit des Systems jederzeit und ohne komplexe Wartungsarbeiten bzw. Ausbau der Systeme kontrollierbar. Schließlich ermöglicht das Prinzip die Kompensation der durch die Kinematik der Klappenführung bedingten Übersetzungsänderungen.

Erfindungsgemäß weist die Antriebseinheit einen elektronischen Regler auf, der mit den Lastsensoren verbunden ist und über den bei Aufnahme einer einen Grenzwert übersteigenden Last ein elektrisches Lastsignal in das Antriebssystem einspeisbar ist, so dass die Antriebsenergie reduziert wird und das System im Momentengleichgewicht ist. Hierdurch werden die Elemente des Antriebsstrangs im Klemmfall wesentlich weniger belastet und können verglichen zu den bisherigen Flugzeughochauftriebssystemen leichter gebaut werden.

Bevorzugte Ausführungsformen der Erfindung ergeben sich aus den sich an den Hauptanspruch anschließenden Unteransprüchen.

Vorteilhaft weist das Antriebssystem Antriebseinheiten mit schneller Regelung der Antriebsleistung auf. Hier bieten sich beispielsweise Hydromotoren mit verstellbarem Verdrängervolumen oder Bürstenlose Gleichstrommotoren an.

Die jeweiligen Lastsensoren können aus mindestens einem in einem Hohlbolzen innen angeordneten Dehnmessstreifen (DMS) bestehen, die in Vollbrückenanordnung ausgeführt sind. Die am Bolzen durch Scherbelastung verursachte Schubdehnung wird so als Änderung des Brückenwiderstandes messbar. Diese Sensorbauart kann vorteilhaft als hermetisch dichter Körper ausgeführt werden, so dass eine erhöhte Resistenz gegen Umwelteinflüsse erzielt werden kann.

Eine weitere Ausführungsvariante des Lastsensors besteht darin, dass dieser aus einer "In-line" installierten Kraftmessdose besteht. Diese kann auf dem Prinzip der piezoresistiven wie auch auf dem Prinzip der magnetoresistiven Spannungsänderung durch Last arbeiten.

Besonders vorteilhaft für die Anwendung in der Luftfahrt ist es, wenn alle Messanordnungen als temperaturkompensierte Anordnungen ausgeführt sind, um der robusten Beanspruchung einer Flugzeugumgebung Rechnung zu tragen.

In der Regel werden die Segmente des Flugzeughochauftriebsklappensystems von je zwei Antriebsstationen bewegt. Dabei nimmt jede der Antriebsstationen einen durch die Geometrie der Kraftangriffe von Luftlast und Antriebskräften definierten Anteil der Klappenlasten auf. Bei einer Unterbrechung des Energieflusses in einer der Antriebsstationen, z. B. durch Bruch eines Bauteils oder Verlust von Verbindungselementen (sogenanntes Disconnect) wird keine Kraft mehr durch den mit dem Lastsensor versehenen Bolzen geleitet. Gemäß einer bevorzugten Ausführungsform der Erfindung kann der Kontrollrechner somit eine unzulässige Veränderung der Kraftverhältnisse erkennen und die notwendigen Informationen an die Crew senden, bzw. die programmierten Notfallreaktionen des Antriebssystems auslösen.

Dieselbe Beobachtung und Auswertung der Kraftverhältnisse kann zur Fehlererkennung genutzt werden, wenn durch einen Schieflauf des Klappenkörpers (sogenanntes Scew) das Zentrum der Luftkräfte verschoben wird und sich in der Folge die Lasttraganteile der Antriebsstränge ändern.

Weitere Einzelheiten und Vorteile der Erfindung werden anhand der in der Zeichnung dargestellten Ausführungsbeispiele näher erläutert.

Es zeigen:
- Fig. 1:: eine Seitenansicht und eine Draufsicht auf ein Teil eines Antriebssystems gemäß einer ersten Ausführungsvariante der Erfindung und
- Fig. 2:: eine Seitenansicht auf ein Antriebssystem gemäß einer zweiten Ausführungsvariante der vorliegenden Erfindung.

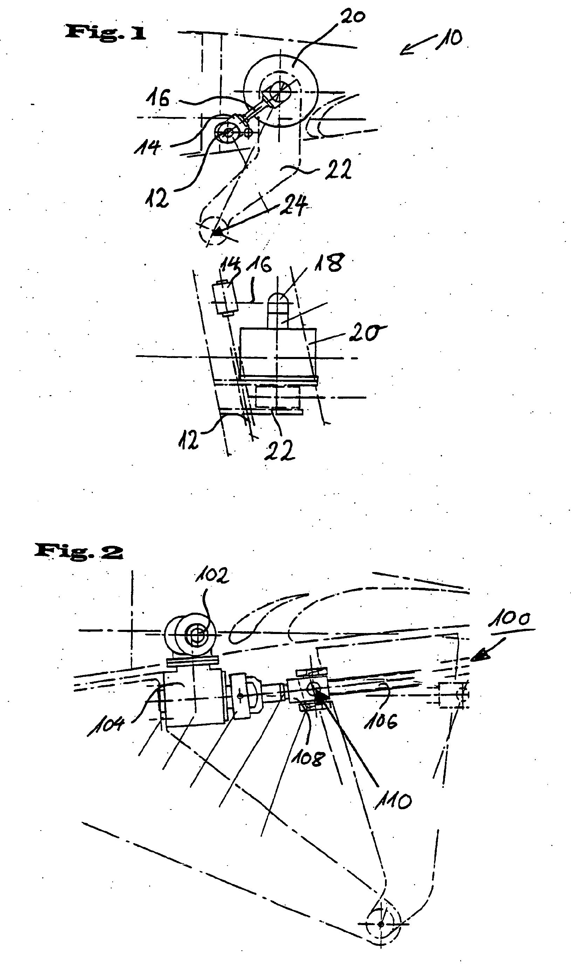

Bei dem in Figur 1 dargestellten Anwendungsbeispiel handelt es sich um eine typische Klappenantriebsstation 10 mit Rotationsgetriebe. Von einer zentralen Antriebswelle 12 wird die Antriebsenergie über ein Abzweiggetriebe 14 auf eine Abzweig-Triebwelle 16 geführt. Ein Winkelgetriebe 18 lenkt die Antriebsenergie in ein Reduziergetriebe 20, das abtriebsseitig einen Hebel 22 antreibt. Ein Bolzen 24 mit hier nicht näher dargestellten integrierten Lastsensor bindet den Hebel 22 in hier ebenfalls nicht näher dargestellter Art und Weise an die Antriebskinematik des anzutreibenden Klappenkörpers an.

In der Figur 2 ist eine zweite Ausführungsvariante für eine typische Klappenantriebsstation mit Lineargetriebe 100 gezeigt. Als Lineargetriebe kann beispielsweise ein Kugelrollspindel dienen. Hier wird von einer zentralen Antriebswelle 102 die Antriebsenergie auf ein Reduziergetriebe 104 abgezweigt. Ausgangsseitig treibt das Reduziergetriebe 104 eine Spindel 106 an. Mit einer Spindelmutter 108 wird die Rotationsbewegung in eine Linearbewegung transformiert. Ein Bolzen 110 mit erfindungsgemäß integriertem Lastsensor verbindet die Spindelmutter 108 mit der entsprechend hier nicht näher dargestellten Antriebskinematik des Klappenkörpers.

## Patentansprüche

1. Flugzeughochauftriebssystem mit einem Antriebssystem mit einer Antriebseinheit zur Erzeugung von Antriebsenergie, Elementen (12, 102) zum Übertragen der Antriebsenergie über die gesamte Spannweite an Getriebe umfassenden Antriebstationen einzelner Segmente von Landeklappen- und Vorflügelsystemen und mit einer Überlastsicherung,
**dadurch gekennzeichnet,**
**dass** die Überlastsicherung aus elektrischen Lastsensoren besteht, die an den Einleitpunkten (24, 110) der Antriebsenergie vom jeweiligen Getriebe an die einzelnen Segmente der Landeklappen- und Vorflügelsysteme angeordnet sind, und dass die Antriebseinheit einen elektronischen Regler aufweist, der mit den Lastsensoren verbunden ist und über den bei Aufnahme einer einen Grenzwert überschreitenden Last ein elektrisches Signal in das Antriebssystem einspeisbar ist, so dass die Antriebsenergie reduziert wird.

2. Flugzeughochauftriebssystem nach Anspruch 1, **dadurch gekennzeichnet, daß** das Antriebssystem als Antriebseinheiten Hydromotoren mit verstellbarem Verdrängervolumen oder bürstenlose Gleichstrommotoren mit schneller Regelung der Antriebsleistung umfaßt.

3. Flugzeughochauftriebssystem nach einem der Ansprüche 1 bis 2, **dadurch gekennzeichnet, daß** der Lastsensor aus mindestens einem in einem Hohlbolzen (24, 110) innen angeordneten Dehnmeßstreifen (DMS) in Vollbrückenanordnung besteht.

4. Flugzeughochauftriebssystem nach einem der Ansprüche 1 bis 3, **dadurch gekennzeichnet, daß** der Lastsensor aus einer Kraftmessdose besteht.

5. Flugzeughochauftriebssystem nach einem der Ansprüche 1 bis 4, **dadurch gekennzeichnet, daß** die Lastsensoren als temperaturkompensierte Anordnungen ausgeführt sind.

6. Flugzeughochauftriebssystem nach einem der Ansprüche 1 bis 5, **dadurch gekennzeichnet, daß** über die Überlastsicherung der Schieflauf eines Klappenkörpers und/ oder die Unterbrechung des Energieflusses zum Antrieb eines Klappenkörpers durch Beobachtung und Auswertung der gemessenen Lastverhältnisse feststellbar ist.

## Claims

1. Aircraft lift augmentation system with a drive system with a drive unit for generation of drive energy, with elements (12, 102) for the transmission of the drive energy over the complete span to drive stations, provided with gearboxes, of individual segments of landing flap and leading edge slat systems and with an overload protection,
**characterized in that**,
the overload protection consists of electrical load sensors that are arranged at the application points (24, 110) of the drive energy of the particular gearbox at the individual segments of the landing flap and leading edge slat systems, and that the drive unit has an electronic controller connected to the load sensors by means of which an electrical signal can be fed to the drive system if the overshoot of a limit value is detected, so that the drive energy is reduced.

2. Aircraft lift augmentation system according to Claim 1, **characterized in that** the drive system includes, as drive units, hydraulic motors with an adjustable displacement volume or brushless d.c. motors with fast control of the drive power.

3. Aircraft lift augmentation system according to one of Claims 1 to 2, **characterized in that** the load sensor consists of at least one strain gauge (DMS) in a full-bridge arrangement, arranged in a hollow pin (24, 110).

4. Aircraft lift augmentation system according to one of Claims 1 to 3, **characterized in that** the load sensor consists of a load cell.

5. Aircraft lift augmentation system according to one of Claims 1 to 4, **characterized in that** the load sensors are designed as temperature-compensated devices.

6. Aircraft lift augmentation system according to one of Claims 1 to 5, **characterized in that** the overload protection enables the skewing of a flap section and/or the interruption of the energy flow to the drive of a flap section to be detected by monitoring and evaluating the measured load conditions.

## Revendications

1. Système hypersustentateur pour avion comprenant un système d'entraînement avec une unité d'entraînement pour générer de l'énergie d'entraînement, des éléments (12, 102) pour la transmission de l'énergie d'entraînement sur l'ensemble de l'envergure à des stations d'entraînement, comprenant des engrenages, de segments individuels de systèmes de volet d'atterrissage et de bec mobile et avec une protection de surcharge,
**caractérisé en ce que**
la protection de surcharge se compose de capteurs de charge électriques, qui sont disposés aux points d'application (24, 110) de l'énergie d'entraînement de l'engrenage concerné sur les segments individuels des systèmes de volet d'atterrissage et de bec mobile, et **en ce que** l'unité d'entraînement présente un régulateur électronique, qui est relié aux capteurs de charge et par lequel, en cas de réception d'une charge dépassant une valeur limite, un signal électrique peut être injecté dans le système d'entraînement, de sorte que l'énergie d'entraînement est réduite.

2. Système hypersustentateur pour avion selon la revendication 1, **caractérisé en ce que** le système d'entraînement comprend comme unités d'entraînement des moteurs hydrauliques avec un volume de déplacement réglable ou des moteurs à courant continu sans brosse avec un réglage rapide de la puissance d'entraînement.

3. Système hypersustentateur pour avion selon l'une quelconque des revendications 1 à 2, **caractérisé en ce que** le capteur de charge se compose d'au moins un extensomètre à résistance (DMS) disposé à l'intérieur dans un boulon creux (24, 110) dans un agencement de pont intégral.

4. Système hypersustentateur pour avion selon l'une quelconque des revendications 1 à 3, **caractérisé en ce que** le capteur de charge se compose d'une boîte dynamométrique.

5. Système hypersustentateur pour avion selon l'une quelconque des revendications 1 à 4, **caractérisé en ce que** les capteurs de charge sont réalisés sous la forme d'agencements à compensation thermique.

6. Système hypersustentateur pour avion selon l'une quelconque des revendications 1 à 5, **caractérisé en ce que**, par la protection de surcharge, le mauvais fonctionnement d'un corps de volet et/ou l'interruption du flux d'énergie pour l'entraînement d'un corps de volet peut être contacté par l'observation et l'analyse des conditions de charge mesurées.
